# FASCICULE DE BREVET EUROPEEN

(11) **EP 4 077 105 B1**
(45) Date de publication et mention de la délivrance du brevet: **05.02.2025**
(21) Numéro de dépôt: 20819750.9
(22) Date de dépôt: 08.12.2020
(51) Int. Cl.: B62D 25/08, B62D 25/20

(54) **STRUCTURE DE PARTIE ARRIERE DE CAISSE DE VEHICULE AUTOMOBILE EQUIPEE DE LONGERONS ET LONGERONNETS**
AUFBAU EINES KRAFTFAHRZEUG-HINTERTEILS, DAS MIT SEITENELEMENTEN UND LÄNGSELEMENTEN AUSGERÜSTET IST
STRUCTURE OF A MOTOR VEHICLE BODY REAR PART EQUIPPED WITH SIDE MEMBERS AND LONGITUDINAL MEMBERS

(30) Priorité: 18.12.2019 FR 1914699
(43) Date de publication de la demande: 26.10.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: FARGEAS, Nicolas, 28410 SERVILLE (FR)
(74) Mandataire: Renault Group
(86) Numéro de dépôt international: PCT/EP2020/084989
(87) Numéro de publication internationale: WO 2021/122131

(56) Documents cités:
- FR-A1- 3 050 704
- JP-A- 2018 065 428
- KR-A- 20170 076 095
- US-A1- 2010 052 368
- US-A1- 2017 183 037

## Description

L'invention a pour objet une structure de partie arrière de caisse de véhicule automobile équipée de longerons et longeronnets.

Les véhicules hybrides (véhicules dits HEV « Hybrid Electric Véhicule » ou PHEV « Plug-in Hybrid Electric Vehicle » en terminologie anglo-saxonne), comprennent à la fois un moteur thermique relié à un réservoir de carburant et une batterie de traction. La batterie et le réservoir sont en général situés au niveau de la structure arrière de la caisse du véhicule, notamment à proximité du train arrière du véhicule portant les roues arrière. Une telle structure arrière de caisse présente habituellement deux longerons latéraux s'étendant suivant la direction longitudinale du véhicule reliés à deux traverses s'étendant suivant la direction transversale du véhicule. Les longerons et traverses forment ainsi un cadre sur lequel est fixé le train arrière. Le réservoir comme la batterie peuvent être situés à proximité immédiate du train arrière, vers l'avant du véhicule.

En cas de choc arrière longitudinal, il est nécessaire de garantir l'intégrité du réservoir afin de réduire les risques de fuite et l'intégrité de la batterie afin de réduire les coûts de réparation et les risques d'incendie dû à la dégradation des modules électriques internes à la batterie.

Il existe des agencements permettant d'absorber les chocs arrière. Notamment, le document FR3050704A1 décrit une structure arrière comprenant un système d'absorption d'énergie comprenant deux parties d'absorption longitudinales fixées chacune à un longeron, le long de celui-ci, et de longueur plus courte que ce dernier, dont l'extrémité située du côté arrière du véhicule est équipée d'un caisson d'absorption d'énergie également connu sous l'expression anglo-saxonne « crash box ». Un tel système d'absorption d'énergie intervient pour des chocs à grande vitesse (80km/h) et participe à l'absorption d'énergie après déformation des longerons. Ce type de système d'absorption d'énergie ne permet donc pas d'absorber l'énergie dès le début de la déformation des longerons. En outre, l'utilisation de crash box augmente la masse et rend plus complexe la réalisation du système d'absorption. Le document US20170183037A1 décrit également une structure de partie arrière de caisse de véhicule automobile comprenant deux longerons latéraux ainsi que deux longeronnets s'étendant suivant la direction longitudinale et situés chacun à distance d'un longeron suivant la direction transversale, les parties avant et arrière de ces derniers étant reliées respectivement à des éléments de structure transversaux avant et arrière.

Il existe donc un besoin pour une structure de partie arrière de caisse de véhicule automobile améliorant l'absorption des chocs arrière à grande vitesse et qui soit simple, peu coûteuse à réaliser et sans surpoids notable.

A cet effet, l'invention concerne une structure de partie arrière de caisse de véhicule automobile présentant une direction longitudinale et une direction transversale perpendiculaire à la direction longitudinale. La structure selon l'invention comprend deux longerons latéraux s'étendant suivant la direction longitudinale, chaque longeron latéral présentant une extrémité reliée à un élément de structure transversal avant et une autre extrémité reliée à un élément de structure transversal arrière, chaque élément de structure transversal s'étendant suivant la direction transversale. Selon l'invention, la structure comprend en outre, entre les deux longerons, deux longeronnets s'étendant suivant la direction longitudinale et situés chacun à distance d'un longeron suivant la direction transversale, chaque longeronnet présentant une extrémité reliée à l'élément de structure transversal avant et une autre extrémité reliée à l'élément de structure transversal arrière.

Dans cet agencement, les longeronnets sont ainsi de même longueur que les longerons latéraux. Ils sont par ailleurs espacés des longerons latéraux suivant la direction transversale, notamment d'une distance prédéterminée. Autrement dit, les longeronnets ne sont pas accolés aux longerons latéraux. Les longeronnets ne sont pas non plus fixés aux longerons latéraux. Notamment, chaque longeronnet peut être séparé d'un longeron latéral adjacent d'une distance plus faible que celle le séparant de l'autre longeronnet suivant la direction transversale.

On notera que les directions longitudinale et transversale de la structure de partie arrière de caisse selon l'invention correspondent aux directions longitudinale et transversale du véhicule lorsque la structure est montée sur le véhicule. Les directions avant et arrière correspondent aux directions avant et arrière du véhicule suivant cette direction longitudinale.

Grâce à l'agencement selon l'invention, l'énergie d'un choc arrière longitudinal subi par un véhicule est absorbée simultanément par les longerons et par les longeronnets, les extrémités de chacun étant reliés aux mêmes éléments de structure transversaux, améliorant ainsi la résistance de la structure arrière aux chocs, notamment aux chocs à grande vitesse (par exemple = à 51km/h pour respecter les exigences de la norme NF EN 12767- octobre 2011 lors d'un choc arrière d'une barrière mobile rigide pesant 1100kg - appelé aussi choc BMR1100).

Avantageusement, chaque longeronnet peut être un profilé. Il peut ainsi être réalisé de manière simple et peu coûteuse. Chaque longeronnet peut notamment présenter une section transversale ouverte en U ou en Ω pour une meilleure résistance. L'ouverture de cette section transversale peut notamment être dirigée vers le haut du véhicule lorsque la structure de partie arrière selon l'invention est montée dans le véhicule.

Un tel profilé peut être en matériau métallique, par exemple en acier, notamment acier inoxydable, aluminium, alliage d'aluminium ou tout autre métal ou alliage métallique approprié.

De manière générale, les longerons peuvent être également des profilés, notamment métalliques, présentant une section transversale ouverte similaire.

De manière générale également, les longeronnets, et éventuellement les longerons, peuvent être fixés à un élément de structure formant un plancher du côté de l'ouverture de leur section transversale.

Avantageusement, chaque longeron et longeronnet peut comprendre au moins un organe de fixation d'un train arrière. De tels organes de fixation peuvent être de simples orifices pour la fixation par vis, rivet ou analogue d'un train arrière. Notamment, chaque longeronnet pourra être positionné à une distance suffisante d'un longeron latéral suivant la direction longitudinale afin de réaliser une fixation du train arrière sur le longeronnet. Il est ainsi possible de fixer le train arrière sur la structure de partie arrière selon l'invention sans avoir à prévoir des boîtiers de fixation spécifiques, facilitant ainsi le montage et limitant le nombre de pièces.

Selon l'invention, la structure comprend, de chaque côté suivant la direction transversale, un dispositif de réception d'un ressort d'amortisseur, ce dispositif de réception présentant une extrémité fixée à un longeron et une autre extrémité fixée au longeronnet adjacent. Le dispositif de réception est ainsi encastré entre un longeronnet et un longeron adjacent, ce qui permet d'améliorer sa stabilité en permettant une répartition des efforts exercés par le ressort d'amortisseur entre le longeron et le longeronnet adjacent. De préférence, pour une meilleure stabilité et pour une fixation plus simple, chaque dispositif de réception peut s'étendre suivant la direction transversale. Notamment, chaque dispositif de réception peut présenter une zone de réception d'un ressort d'amortisseur située entre le longeron et un longeronnet adjacent.

Avantageusement, les éléments de structure transversaux, les longerons et les longeronnets sont en matériau métallique, par exemple en acier, notamment acier inoxydable, aluminium, alliage d'aluminium ou tout autre métal ou alliage métallique approprié. Les longeronnets sont alors solidarisés aux éléments de structure transversaux par soudure.

L'invention concerne également un véhicule automobile présentant une structure de partie arrière de caisse selon l'invention.

Avantageusement, le véhicule comprenant un moteur thermique relié à un réservoir de carburant et une batterie de traction, le réservoir de carburant est situé entre les longeronnets et les éléments de structure transversaux avant et arrière, et la batterie de traction est située le long de l'élément de structure transversal avant, du côté avant du véhicule.

Un véhicule automobile présente habituellement un train arrière comprenant une traverse s'étendant suivant la direction transversale reliant deux bras supportant chacun une roue. Avantageusement, le train arrière peut être fixé à la fois aux longerons et aux longeronnets. Cet agencement permet d'éviter d'avoir à prévoir des fixations spécifiques supplémentaires sur la structure de partie arrière.

Habituellement, un train arrière présente aussi des ressorts d'amortisseurs reliés à la structure de partie arrière de caisse de chaque côté de celle-ci suivant la direction transversale. Avantageusement, chaque ressort d'amortisseur peut être en appui sur un dispositif de réception de la structure de partie arrière tel que décrit précédemment.

L'invention est maintenant décrite en référence aux dessins annexés, non limitatifs, dans lesquels :
[Fig. 1] La figure 1 représente une vue de dessous d'une structure de partie arrière de caisse selon un mode de réalisation de l'invention sur laquelle sont fixés un train arrière, une batterie de traction et un réservoir de carburant.
[Fig. 2] La figure 2 représente une vue de dessous de la structure de partie arrière représentée figure 1.
[Fig. 3] La figure 3 représente une vue en perspective d'un longeronnet.
[Fig. 4] La figure 4 représente une vue de dessous en perspective d'un détail de la structure de partie arrière représentée figures 1 et 2.

Dans la présente description, les termes avant, arrière, supérieur, inférieur, font référence aux directions avant et arrière du véhicule, lorsque la structure de partie arrière de caisse de véhicule est montée sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

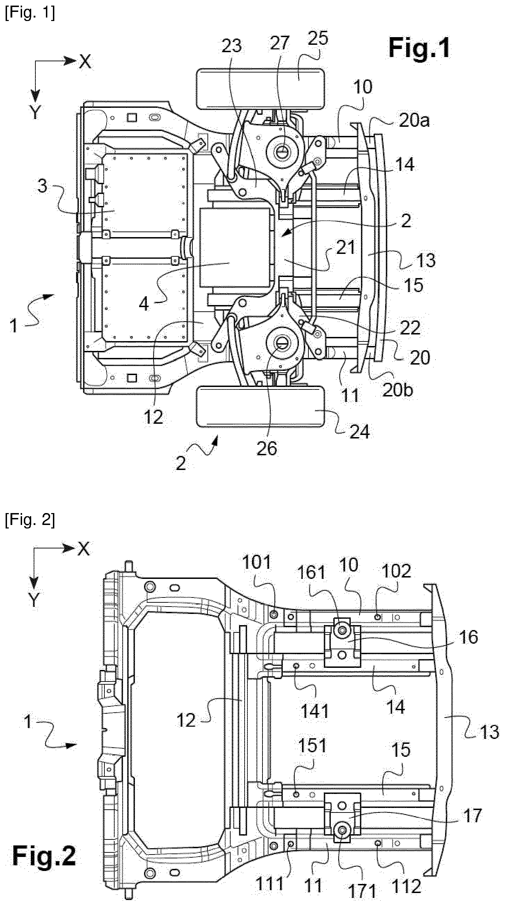

La figure 1 représente en vue de dessous une structure 1 de partie arrière de véhicule automobile sur laquelle sont fixés un train arrière 2, une batterie de traction 3 et un réservoir de carburant 4, ce dernier étant destiné à alimenter un moteur thermique non représenté. La batterie de traction 3 et le réservoir de carburant 4 sont disposés en avant du train arrière 2 suivant la direction longitudinale X du véhicule.

La structure 1 de partie arrière de véhicule automobile comprend un longeron latéral gauche 10 et un longeron latéral droit 11 s'étendant chacun suivant la direction longitudinale X du véhicule. Ces longerons latéraux 10, 11 sont reliés l'un à l'autre par un élément de structure transversal avant 12 et un élément de structure transversal arrière 13 de manière à former un cadre rigide. Autrement dit, chaque longeron latéral présente une extrémité avant reliée à l'élément de structure transversal avant et une extrémité arrière reliée à l'élément de structure transversal arrière 13.

De manière générale, l'élément de structure transversal arrière 13 peut présenter une section transversale creuse fermée. Un tel élément peut participer à la résistance en torsion de la structure de partie arrière et limiter les vibrations en roulement. Ce type d'élément de structure transversal arrière est par exemple situé le long de l'ouverture arrière du coffre du véhicule.

De manière générale, quelque soit le mode de réalisation, la structure 1 de partie arrière peut présenter en outre une traverse extrême arrière 20, située en arrière de l'élément de structure transversal arrière 13 et destinée à recevoir et absorber les chocs à faible vitesse (par exemple inférieurs à 10km/h pour répondre aux protocoles de choc prescrits par les organismes Euro NCAP pour European New Car Assessment Program et RCAR pour Research Council for Automobile Repairs), tel que représenté dans l'exemple. Cette traverse extrême arrière 20 est reliée de manière usuelle aux longerons latéraux 10, 11, ici par des éléments de liaison 20a, 20b s'étendant chacun dans le prolongement d'un longeron latéral.

Selon l'invention, la structure 1 de partie arrière de véhicule automobile comprend deux longeronnets 14, 15 s'étendant chacun suivant la direction longitudinale du véhicule à proximité d'un longeron 10, 11. Ainsi, la structure 1 de partie arrière présente un longeronnet latéral gauche 14 et un longeronnet latéral droit 15. Ces longeronnets sont situés à distance des longerons latéraux suivant la direction transversale. Cette distance pourra être déterminée par l'homme du métier en fonction de la distance séparant les longerons, de la position des fixations du train arrière tel que décrit ci-après, et/ou des éléments techniques à loger éventuellement entre les longeronnets et/ou entre un longeron et un longeronnet adjacent. Avantageusement, pour une meilleure répartition de l'absorption des chocs, chacun des longeronnets peut être situé à une même distance du longeron latéral adjacent transversalement.

Chaque longeronnet 14, 15 s'étend par ailleurs entre les éléments de structure transversaux avant 12 et arrière 13 et est relié à ceux-ci. Ainsi, chaque longeronnet 14, 15 présente une extrémité avant reliée à l'élément de structure transversal avant 12 et une extrémité arrière reliée à l'élément de structure transversal arrière 13. Les longeronnets 14, 15 sont donc de même longueur que les longerons 10,11.

Dans l'exemple, chaque longeronnet est situé entre le milieu de la structure 1 de partie arrière et un longeron latéral suivant la direction transversale Y. De préférence, chacun des longeronnets est plus proche d'un longeron latéral que de l'autre longeronnet et en particulier que du centre de la structure 1 de partie arrière suivant la direction transversale Y. Ceci permet de ménager un espace entre les longeronnets 14, 15 suffisamment grand pour loger un ou plusieurs éléments techniques, tel que le réservoir de carburant 4 dans l'exemple décrit.

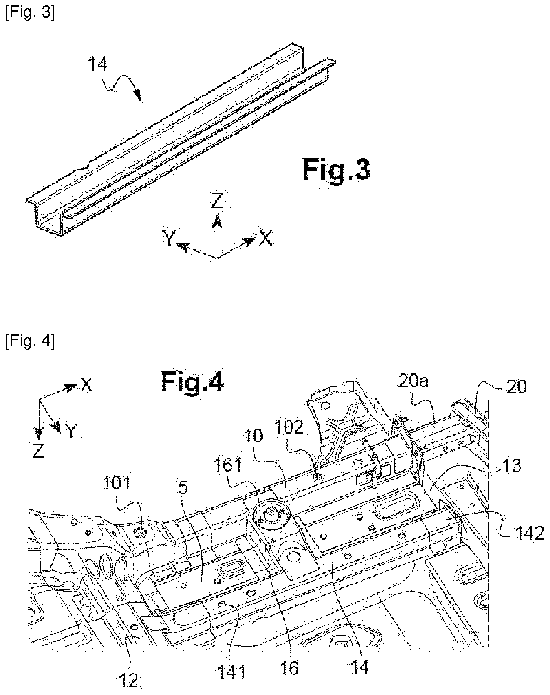

Dans le mode de réalisation décrit, chaque longeronnet 14, 15 est un profilé métallique présentant une section transversale ouverte en U ou Ω, ici en Ω, tel que visible plus clairement figure 3. On notera que l'ouverture de cette section transversale est dirigée vers le haut du véhicule. Dans l'exemple, cette ouverture est fermée par un élément de structure formant plancher 5 s'étendant au dessus des longerons et longeronnets et représenté figure 4.

Avantageusement, les longerons 10,11 sont également des profilés métalliques présentant par exemple une section transversale ouverte similaire à celle des longeronnets 14, 15, également fermée par l'élément de structure formant plancher 5.

Dans l'exemple, chaque longeron 10, 11 et chaque longeronnet 14, 15 présente aussi au moins un organe de fixation d'un train arrière. Ici, chaque longeron 10, 11 présente deux organes de fixation 101, 102, 111, 112 et chaque longeronnet 14, 15 présente un organe de fixation 141,151 respectivement. Ces organes de fixation 101, 102, 111, 112, 141, 145 sont ici de simples orifices permettant le passage de vis, rivets, ou analogues. Bien entendu, l'invention n'est pas limitée par le nombre de fixations prévues sur les longerons et longeronnets pour assurer la fixation du train arrière.

Selon l'invention, la structure 1 de partie arrière présente également, de chaque côté, un dispositif de réception 16, 17 d'un ressort d'amortisseur, chacun des dispositifs de réception 16, 17 présentant une extrémité fixée à un longeron et une autre extrémité fixée au longeronnet adjacent. Un tel agencement des dispositifs de réception 16, 17 permet à ceux-ci de participer au maintien en géométrie des longeronnets. En outre, les efforts subis par chacun des dispositifs de réception 16, 17 sont répartis entre le longeron et le longeronnet adjacent auxquels sont fixés ces dispositifs. Ces dispositifs de réception 16, 17 se présentent ici sous la forme de profilés à section transversale ouverte en forme de Ω dont l'ouverture est également dirigée vers le haut du véhicule (et peut aussi être fermée par l'élément de structure formant plancher 5). Le fond de chaque profilé 16, 17 présente une zone 161, 171 d'appui d'un ressort amortisseur (figure 4). Ces zones 161, 171 s'étendent ici dans un même plan horizontal que des surfaces des longerons et longeronnets.

Avantageusement, les éléments de structure transversaux, les longerons et les longeronnets de la structure 1 de partie arrière sont en matériau métallique, de même que les dispositifs de réception 16,17. Ces différents éléments peuvent ainsi être solidarisés par soudure les uns aux autres, ce qui permet de simplifier la réalisation de la structure de partie arrière 1 selon l'invention.

En fonction des besoins, on notera que les longeronnets 14, 15 peuvent être prolongés à l'une de leurs extrémités ou à chacune de leur extrémité, par un tronçon de profilé de même forme. Il est ainsi possible de réaliser des structures 1 de partie arrière de longueur différentes en utilisant des longeronnets de longueur fixe réalisés en série, la longueur de chaque longeronnet étant adaptée à la longueur de la structure 1 par ajout d'un ou plusieurs tronçons de profilés de longueur adaptée. Dans l'exemple, chaque longeronnet 14, 15 est prolongé du côté de son extrémité arrière par un tronçon de profilé. Un tronçon de profilé 142 est visible figure 3 pour le longeronnet 14. On notera que le tronçon de profilé 142 peut également servir à la fixation du longeronnet à l'élément de structure transversal arrière 13.

Comme on peut le voir sur la figure 1, la structure 1 de partie arrière reçoit en fixation un train arrière 2. Celui-ci présente une traverse 21 s'étendant suivant la direction transversale reliant deux bras 22, 23 supportant chacun une roue 24, 25. Un ressort d'amortisseur 26, 27 s'étend entre le train arrière et la structure de partie arrière (seule les zones de réception inférieures des ressorts d'amortisseur sont visibles figure 1), de chaque côté transversalement du train arrière 2.

Les bras 22, 23 du train arrière 2 sont fixés aux longeronnets 14, 15 et aux longerons 10, 11 par les organes de fixation de ceux-ci. Le train arrière 2 est ainsi fixé à la structure 1 uniquement via les longerons et longeronnets de sorte qu'il n'est pas nécessaire de prévoir des dispositifs de fixation spécifiques distincts pour le fixer à la structure.

Chaque ressort d'amortisseur est par ailleurs en appui sur un dispositif de réception 16, 17 de la structure de partie arrière.

En cas de choc arrière, la traverse extrême arrière 20 va d'abord se déformer. Si le choc arrière est à faible vitesse (par exemple <10 km/h), seule la traverse extrême arrière se déforme et doit être remplacée en réparation. Si le choc arrière est à grande vitesse (par exemple =51km/h), la traverse extrême arrière continue de se déformer jusqu'à venir en appui contre l'élément de structure transversal arrière 13. Dès lors, les longerons 10, 11 et les longeronnets 14, 15 se déforment simultanément et absorbent l'énergie du choc. En réparation, il sera alors nécessaire de remplacer chacun des éléments déformés par le choc.

Bien entendu, l'invention n'est pas limitée au mode de réalisation décrit. Notamment, bien que cela soit moins avantageux pour limiter les coûts de réparation, l'élément de structure transversal arrière pourrait former une traverse extrême arrière. La déformation des longerons et longeronnets intervient alors dès le début d'un choc à faible vitesse.

## Revendications

1. Structure (1) de partie arrière de caisse de véhicule automobile présentant une direction longitudinale et une direction transversale perpendiculaire à la direction longitudinale, ladite structure comprenant deux longerons latéraux (10, 11) s'étendant suivant la direction longitudinale, chaque longeron latéral présentant une extrémité reliée à un élément de structure transversal avant (12) et une autre extrémité reliée à un élément de structure transversal arrière (13), chaque élément de structure transversal (12, 13) s'étendant suivant la direction transversale, la structure (1) comprenant, entre les deux longerons (10, 11), deux longeronnets (14, 15) s'étendant suivant la direction longitudinale et situés chacun à distance d'un longeron (10, 11) suivant la direction transversale, chaque longeronnet (14, 15) présentant une extrémité reliée à l'élément de structure transversal avant (12) et une autre extrémité reliée à l'élément de structure transversal arrière (13), la structure étant **caractérisée en ce que** les longeronnets étant de même longueur que les longerons latéraux, et **en ce que** la structure présente, de chaque côté suivant la direction transversale, un dispositif de réception (16, 17) d'un ressort d'amortisseur présentant une extrémité fixée à un longeron (10, 11) et une autre extrémité fixée au longeronnet (14, 15) adjacente.

2. Structure (1) de partie arrière selon la revendication 1, **caractérisée en ce que** chaque longeronnet (14, 15) est un profilé.

3. Structure (1) de partie arrière selon la revendication 2, **caractérisée en ce que** chaque longeronnet (14, 15) est un profilé présentant une section transversale ouverte en U ou Ω.

4. Structure (1) de partie arrière selon l'une quelconque des revendications 1 à 3, **caractérisée en ce que** chaque longeron (10, 11) et chaque longeronnet (14, 15) présente au moins un organe de fixation (101, 102, 111, 112, 141, 151) d'un train arrière.

5. Structure (1) de partie arrière selon l'une quelconque des revendications 1 à 4, caractérisée en ce chaque dispositif de réception (16, 17) s'étend suivant la direction transversale.

6. Structure (1) de partie arrière selon l'une quelconque des revendications 1 à 6, **caractérisée en ce que** les éléments de structure transversaux (12, 13), les longerons (10, 11) et les longeronnets (14, 15) sont en matériau métallique et **en ce que** les longeronnets sont solidarisés aux éléments de structure transversaux par soudure.

7. Véhicule automobile présentant une structure (1) de partie arrière de caisse selon l'une quelconque des revendications 1 à 6.

8. Véhicule automobile selon la revendication 7 comprenant un moteur thermique relié à un réservoir de carburant (4) et une batterie de traction (3), **caractérisé en ce que** le réservoir de carburant (4) est situé entre les longeronnets (14, 15) et les éléments de structure transversaux avant et arrière et la batterie de traction est située le long de l'élément de structure transversal avant, du côté avant du véhicule.

9. Véhicule automobile selon la revendication 7 ou 8 comprenant un train arrière (2) de véhicule présentant une traverse (21) s'étendant suivant la direction transversale reliant deux bras (22, 23) supportant chacun une roue (24, 25) et un ressort d'amortisseur (26, 27) relié à la structure de partie arrière, **caractérisé en ce que** le train arrière est fixé aux longeronnets (14, 15) et aux longerons (10, 11) et, optionnellement, chaque ressort d'amortisseur (26, 27) est en appui sur un dispositif de réception (16, 17) de la structure (1) de partie arrière.

## Patentansprüche

1. Aufbau (1) eines Hinterteils einer Kraftfahrzeugkarosserie, der eine Längsrichtung und eine zu der Längsrichtung senkrechte Querrichtung aufweist, wobei der Aufbau zwei seitliche Längsträger (10, 11) beinhaltet, die sich gemäß der Längsrichtung erstrecken, wobei jeder seitliche Längsträger ein Ende, das mit einem vorderen Querstrukturelement (12) verbunden ist, und ein anderes Ende, das mit einem hinteren Querstrukturelement (13) verbunden ist, aufweist, wobei sich jedes Querstrukturelement (12, 13) gemäß der Querrichtung erstreckt, wobei der Aufbau (1) zwischen den zwei Längsträgern (10, 11) zwei kleine Längsträger (14, 15) beinhaltet, die sich gemäß der Längsrichtung erstrecken und sich jeweils gemäß der Querrichtung von einem Längsträger (10, 11) beabstandet befinden, wobei jeder kleine Längsträger (14, 15) ein Ende, das mit dem vorderen Querstrukturelement (12) verbunden ist, und ein anderes Ende, das mit dem hinteren Querstrukturelement (13) verbunden ist, aufweist, wobei der Aufbau **dadurch gekennzeichnet ist, dass** die kleinen Längsträger die gleiche Länge wie die seitlichen Längsträger aufweisen und dass der Aufbau auf jeder Seite gemäß der Querrichtung eine Vorrichtung zur Aufnahme (16, 17) einer Dämpferfeder aufweist, die ein Ende, das an einem Längsträger (10, 11) befestigt ist, und ein anderes Ende, das an dem benachbarten kleinen Längsträger (14, 15) befestigt ist, aufweist.

2. Aufbau (1) eines Hinterteils nach Anspruch 1, **dadurch gekennzeichnet, dass** jeder kleine Längsträger (14, 15) ein Profil ist.

3. Aufbau (1) eines Hinterteils nach Anspruch 2, **dadurch gekennzeichnet, dass** jeder kleine Längsträger (14, 15) ein Profil ist, das einen U- oder Ω-förmig geöffneten Querschnitt aufweist.

4. Aufbau (1) eines Hinterteils nach einem der Ansprüche 1 bis 3, **dadurch gekennzeichnet, dass** jeder Längsträger (10, 11) und jeder kleine Längsträger (14, 15) mindestens ein Organ zur Befestigung (101, 102, 111, 112, 141, 151) einer Hinterachse aufweist.

5. Aufbau (1) eines Hinterteils nach einem der Ansprüche 1 bis 4, **dadurch gekennzeichnet, dass** sich jede Aufnahmevorrichtung (16, 17) gemäß der Querrichtung erstreckt.

6. Aufbau (1) eines Hinterteils nach einem der Ansprüche 1 bis 6, **dadurch gekennzeichnet, dass** die Querstrukturelemente (12, 13), die Längsträger (10, 11) und die kleinen Längsträger (14, 15) aus metallischem Material sind und dass die kleinen Längsträger durch Schweißen fest mit den Querstrukturelementen verbunden sind.

7. Kraftfahrzeug, das einen Aufbau (1) eines Karosseriehinterteils nach einem der Ansprüche 1 bis 6 aufweist.

8. Kraftfahrzeug nach Anspruch 7, beinhaltend einen Verbrennungsmotor, der mit einem Kraftstofftank (4) und einer Antriebsbatterie (3) verbunden ist, **dadurch gekennzeichnet, dass** sich der Kraftstofftank (4) zwischen den kleinen Längsträgern (14, 15) und dem vorderen und hinteren Querstrukturelement befindet und sich die Antriebsbatterie entlang des vorderen Querstrukturelements an der Vorderseite des Fahrzeugs befindet.

9. Kraftfahrzeug nach Anspruch 7 oder 8, beinhaltend eine Fahrzeughinterachse (2), die eine Traverse (21), die sich gemäß der Querrichtung erstreckt und zwei Arme (22, 23) verbindet, die jeweils ein Rad (24, 25) stützen, und eine Dämpferfeder (26, 27), die mit dem Hinterteilaufbau verbunden ist, aufweist, **dadurch gekennzeichnet, dass** die Hinterachse an den kleinen Längsträgern (14, 15) und an den Längsträgern (10, 11) befestigt ist und sich optional jede Dämpferfeder (26, 27) an einer Aufnahmevorrichtung (16, 17) des Hinterteilaufbaus (1) abstützt.

## Claims

1. Motor vehicle body rear part structure (1) having a longitudinal direction and a transverse direction perpendicular to the longitudinal direction, said structure comprising two lateral spars (10, 11) extending in the longitudinal direction, each lateral spar having one end connected to a front transverse structural element (12) and another end connected to a rear transverse structural element (13), each transverse structural element (12, 13) extending in the transverse direction, the structure (1) comprising, between the two spars (10, 11), two auxiliary spars (14, 15) extending in the longitudinal direction and each located at a distance from a spar (10, 11) in the transverse direction, each auxiliary spar (14, 15) having one end connected to the front transverse structural element (12) and another end connected to the rear transverse structural element (13), the structure being **characterized in that** the auxiliary spars are of the same length as the lateral spars, and **in that** the structure has, on each side in the transverse direction, a device (16, 17) for receiving a shock absorber spring having one end attached to a spar (10, 11) and another end attached to the adjacent auxiliary spar (14, 15).

2. Rear part structure (1) according to Claim 1, **characterized in that** each auxiliary spar (14, 15) is a section.

3. Rear part structure (1) according to Claim 2, **characterized in that** each auxiliary spar (14, 15) is a section having an open, U- or Q-shaped cross section.

4. Rear part structure (1) according to any one of Claims 1 to 3, **characterized in that** each spar (10, 11) and each auxiliary spar (14, 15) has at least one attachment member (101, 102, 111, 112, 141, 151) for a rear axle assembly.

5. Rear part structure (1) according to any one of Claims 1 to 4, **characterized in that** each receiving device (16, 17) extends in the transverse direction.

6. Rear part structure (1) according to any one of Claims 1 to 6, **characterized in that** the transverse structural elements (12, 13), the spars (10, 11) and the auxiliary spars (14, 15) are made of metallic material and **in that** the auxiliary spars are secured to the transverse structural elements by welding.

7. Motor vehicle having a body rear part structure (1) according to any one of Claims 1 to 6.

8. Motor vehicle according to Claim 7, comprising a heat engine connected to a fuel tank (4) and a traction battery (3), **characterized in that** the fuel tank (4) is located between the auxiliary spars (14, 15) and the front and rear transverse structural elements, and the traction battery is located along the front transverse structural element, on the front side of the vehicle.

9. Motor vehicle according to Claim 7 or 8, comprising a vehicle rear axle assembly (2) having a crossmember (21) extending in the transverse direction and connecting two arms (22, 23) each supporting a wheel (24, 25) and a shock absorber spring (26, 27) connected to the rear part structure, **characterized in that** the rear axle assembly is attached to the auxiliary spars (14, 15) and to the spars (10, 11) and, optionally, each shock absorber spring (26, 27) is supported on a receiving device (16, 17) of the rear part structure (1).
